# EUROPEAN PATENT SPECIFICATION

(11) **EP 0 714 979 B1**
(45) Date of publication and mention of the grant of the patent: **16.07.2003**
(21) Application number: 95500136.7
(22) Date of filing: 05.10.1995
(51) Int. Cl.: C12C 1/027

(54) **Germination vat for malthouses**
Keimbehalter für Mälzereien
Cuve de germination pour malteries

(30) Priority: 05.10.1994 ES 9402090
(43) Date of publication of application: 05.06.1996
(73) Proprietor: SEEGER INDUSTRIAL, S.A., 28028 Madrid (ES)
(72) Inventor: Belvedere, Francesco, E-28007 Madrid (ES)
(74) Representative: Carpintero Lopez, Francisco

(56) References cited:
- EP-A- 0 449 759
- BE-A- 1 003 485
- DE-A- 2 101 848
- DE-A- 2 847 458
- GB-A- 1 487 824

## Description

### FIELD OF THE INVENTION

The present invention refers to a germination vat, intended to be used in malthouses, i.e. in germinating and roasting facilities for malt, wherein the starch contained in it becomes transformed into sugar, through germination, for its subsequent conversion into alcohol, mainly into beer.

### BACKGROUND OF THE INVENTION

In a conventional malt elaboration process, as it is known, the malt is subjected to a first hydrating phase, to cause it to germinate or ferment, after which it is subjected to a roasting phase, the purpose of which is to have the product dried to avoid putrefaction of the product. Furthermore, and as it is also known, during the germinating phase, which is carried out throughout a period of time of some six days, the malt must be suitably stirred so that such fermentation occur in optimum conditions and compact lumps be not caused by small roots generated in such germination.

Independently of the malthouses which could be referred to as "linear", as the commonly known as "Wanderhaufen", wherein the green malt is suitably distributed throughout a germination street, of considerble length, nearly 100 meters, along which the malt is lineally moved, the complete treatment process of the same being carried out along said street, cylindrical vats are also known, which take the form of a cylindrical container, of considerable dimensions, provided with a latticed double bottom, so that this lattice constitutes a means of retention of the malt, which, nevertheless, due to its perforated constitution, allows air to flow through it during the roasting phase, as well as water steam to flow through it during the humidifying or soaking phase.

In this type of vats (see e.g. DE-A-2847458), an upper loading mouth and a lower unloading mouth are provided, and inside the vat, a plurality of stirring spindles, as well as a worm screw to empty or unload the vat, are provided.

More specifically, it comprises a strong central column to the upper part of which an also strong, radial rotatory arm is connected, to which the stirring spindles are vertically associated, so that the rotatory movement of said arm causes said spindles to travel along the entire volume of the vat and, consequently, they cause the entire mass of malt to be moved.

In an analogous manner, the unloading worm screw is also centered and radially associated to the column, with respect to which it must vertically slide, so that it be adapted to the level of material inside the vat, and it must likewise rotate with the central column to act, as such unloading element, throughout the entire vat.

This solution poses problems which are basically centred upon two aspects; on the one hand the multiple driving elements which are necessary in order to stir and unload the malt are subjected to an environment with a very high relative dampness, which implies very negative working conditions with an impact on the maintenance and useful lifetime of the equipment. On the other hand, since said driving elements are subjected to a planetary movement with respect to the axis of the vat, i.e., since they are mobile elements as well as driving elements, sophisticated energy supply systems become necessary, through large brushes which permit to maintain the electrical connection between the external power supply, obviously fixed, and the mobile elements to be fed, which, in addition to structurally complicating the system and consequently raising its costs, also implies relevant maintenance costs and an equally important breakdown risk.

As an attempt to obviate this problem, a solution consisting of maintaining the aforementioned mobile elements fixed is known (see DE-A-2101848), so that the mobile element be the base of the vat, and that therefore the malt be distributed on it, but this solution has not resulted viable in practice inasmuch as it generates a number of ancillary problems among which the total lack of watertightness is particularly important, since, due to the large dimensions of the vat between its rotatory base and the lateral and fixed wall, loose spaces are formed which may even be some centimeters long, which renders the installation functionally invalid.

### DESCRIPTION OF THE INVENTION

The germination vat for malthouses of the invention solves in a fully satisfactory manner the aforesaid problems, in the different aspects commented upon.

To this end, the features of the vat are centred upon the fact that the body of the same, both its base as well as its lateral surface, is rotatory, the stirring elements as well as the unloading worm screw being kept static inside it.

According to another of the characteristics of the invention, the lid or cover of the vat, which is a fixed element, mounted on adequate external supports, receives through its upper or external face the driving motors of the stirring spindles, as well as the driving motor of the elevating spindle of the unloading worm screw, so that, all of these motors being external to the fermentation chamber, they will not be affected by the extreme conditions of dampness existing within the same.

The vat rests, by means of rolling supports, on guides adequately provided to this end, corresponding to the periphery or lateral part of said vat as well as to the axis thereof.

Finally, and according to another characteristic of the invention, the bottom or closed base of the vat adopts a notably conical configuration, sloping toward its center, which is a substantial improvement in the periodic cleaning process of the vat, since this slope facilitates the dragging of the residues toward the corresponding evacuation nozzle.

### BRIEF DESCRIPTION OF THE DRAWINGS

In order to complement the description which is being made, and with the aim at helping to a better understanding of the characteristics of the invention, a set of drawings is attached to the present description, as an integrating part of the same, where illustratively and without limitation the following has been represented:

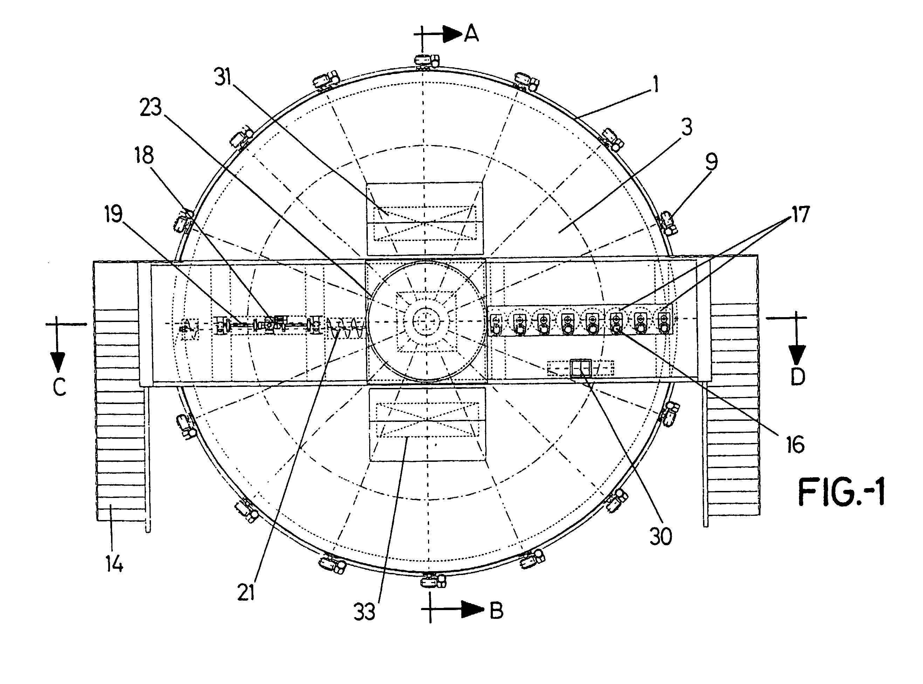

Figure 1.- Shows a schematic plan view of a germination vat for malthouses according to the present invention.

Figure 2.- Shows a transverse cross-sectional side elevation of the vat through the cut A-B of Figure 1.

Figure 3.- Shows, finally, another diametrical cross-sectional side elevation of the vat, through an imaginary plane rotated 90° with respect to that of the previous Figure and through the cut C-D of Figure 1.

### PREFERRED EMBODIMENT OF THE INVENTION

It can be observed in these Figures that the present germination vat is structured, as any conventional vat of this kind, with a basically cylindrical body 1, inside which a double bottom has been provided, concretely a latticed or perforated intermediate bottom 2, to allow air and water to flow through it, but not cereal grains to pass through it from the upper chamber 3 containing said cereal, to a lower chamber 4 provided between this intermediate bottom 2 and a totally closed bottom 5, and this assembly is completed with an upper lid 6 which closes the vat, but with the special feature that in this case while the lid 6 is a fixed element, the assembly constituted by the side wall 1 of the body of the vat and the double bottom 2, 5, is rotatory.

To this end, and more specifically, this mobile assembly 1, 2, 5, leans, by means of rolling elements 7, on a circumferential guide 8, each rolling element 7 including a moto-reducer set 9 for rotatingly dragging the vat.

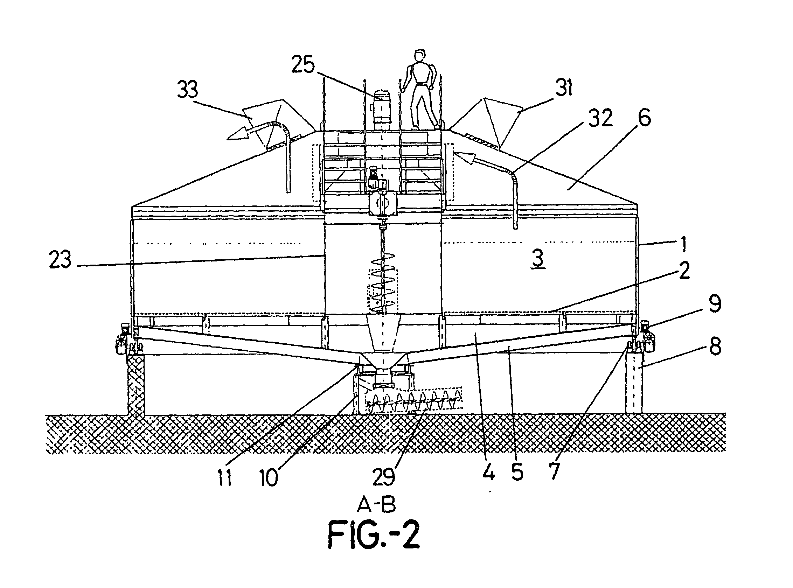

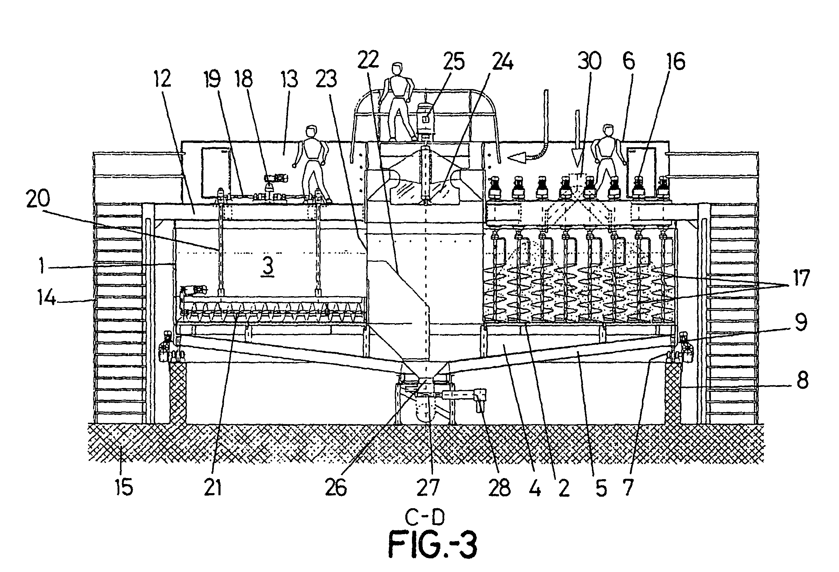

In a complementary manner, at the center of the lower or closed base 5, which adopts the conical configuration which can be seen in Figures 2 and 3, in order to facilitate the cleaning operations thereof, as it has been said above, a second annular guide 10 has been provided on which the base of the vat rests by means of another set of rolling supports 11, this time not provided with motors.

The lid 6 comprises a basic structure 12 which determines a diametrical passage 13 which is reached through end staircases 14 associated with the vertical structure which joins the upper structure 12 or passage 13 and the ground 15.

In this passage 13 and outside the germination chamber 3, the driving motors 16 of the stirring spindles 17 are provided, as well as the motor 18 which, by means of the double spindle 19, drives the elevating racks 20 of the standard worm screw 21 for unloading the vat, all these elements, i.e., the stirring spindles 17 as well as the unloading worm screw 21, being, therefore, fixed within the body 1 of the vat, as well as the unloading hopper 22 housed inside the hollow central column 23 which is also conventional and comprises at an upper level an aeration distributor 24 operated by a motor 25 which is also located outside the germination chamber 3, as it can be especially observed in Figure 3.

The lid 6 is coupled to the mobile body 1 by means of a watertightness joint, and the closed base 5 of said body 1 ends on an emptying neck 26 provided with a valve 27 with its corresponding driving means 28, beyond which the corresponding evacuation worm screw 29 is provided.

Thus, according to the described structure and in a conventional manner, once the cereal has had access to the fermentation chamber 3 through the entry or loading mouth 30, the rotation of the body 1 of the vat itself, with said chamber 3 and the double bottom 2, 5, causes said cereal to be homogeneously distributed inside the chamber 3, as well as during the subsequent stirring thereof during the fermentation, with a water steam supply through the inlet 31 which ends in the hollow column 23, and, through the latter, in the lower chamber 4, from which it flows to the fermentation chamber 3 through the lattice 2.

During the roasting or drying phase, the hot air also flows through the inlet 31, in this case with a recycling phase according to arrow 32 in Figure 2, and when the air reaches a degree of high dampness, it is renewed by having it expelled to the outside through the outlet 33.

When the process is terminated, the unloading worm screw 21 radially drags the malt toward the unloading hopper 22 and through it to the outside, obviously in an open position for valve 27.

The present invention may be embodied in other specific forms without departing from the scope of the appended claims.

## Claims

1. Germination vat for malthouses comprising:
- a cylindrical body (1),
- an upper lid (6) which closes said cylindrical body (1),
- at least one stirring spindle (17) inside said cylindrical body (1),
- an unloading worm screw (21) inside said cylindrical body (1),
- an intermediate bottom (2), latticed or perforated, of said cylindrical body (1), and
- a lower bottom (5), totally closed, of said cylindrical body (1),
**characterized in that**
- said at least one stirring spindle (17) and said unloading worm screw (21) are associated with said lid (6),
- said at least one stirring spindle (17), said unloading worm screw (21) and said lid (6) are static elements, and
- said cylindrical body (1) and its intermediate and lower bottoms (2), (5), form a rotatory assembly.

2. Germination vat for malthouses according to claim 1, further comprising a central hollow column (23) for aerating, humidifying and unloading cereal.

3. Germination vat for malthouses according to claim 2, further **characterized in that** said central column (23) is coupled to the lid (6), and static.

4. Germination vat according to any of the preceding claims, further **characterized in that** the rotatory assembly formed by the cylindrical body (1) and its intermediate and lower bottoms (2), (5), is caused to rotate by means of rolling elements (7) on a circumferential guide (8).

5. Germination vat for malthouses according to claim 4, further **characterized in that** each rolling element (7) includes a moto-reducing set (9).

6. Germination vat for malthouses according to any of the preceding claims, further **characterized in that** the lower bottom (5) adopts a conical configuration.

7. Germination vat for malthouses according to claim 6, further **characterized in that** at the center of the lower bottom (5) an annular guide (10) is provided, on which a set of rolling supports (11) for the base of the vat rests.

8. Germination vat for malthouses according to any of the preceding claims, further **characterized in that** the upper lid (6) comprises a basic structure (12) joined to the ground (15), which determines a passage (13) where the driving motors (16), (18) of the at least one stirring spindle (17) and the unloading worm screw (21) are located and preserved from the environment of the fermentation chamber (3).

9. Germination vat for malthouses according to claim 8, further **characterized in that** end staircases (14) for entering the passage (13) are provided on the structure which joins the basic structure (12) of the upper lid (6) to the ground (15).

10. Germination vat for malthouses according to any of the preceding claims, further **characterized in that** the lid (6) is coupled to the cylindrical body (1) by means of a watertight joint.

## Patentansprüche

1. Keimtank für Mälzereien, der Folgendes umfasst:
- einen zylindrischen Körper (1),
- einen oberen Deckel (6), der besagten zylindrischen Körper (1) schliesst,
- zumindest eine Rührwelle (17) innerhalb des besagten zylindrischen Körpers (1),
- eine Ausweichschraube (21) innerhalb des besagten zylindrischen Körpers (1)
- einen Zwischenboden (2) des besagten zylindrischen Körpers (1), in Form eines Gitter oder Siebs,
- einen unteren komplett geschlossenen Boden (5) des besagten zylindrischen Körpers (1),
**dadurch gekennzeichnet, dass**
- besagte mindestens eine Rührwelle (17) und besagte Ausweichschraube (21) mit dem genannten Deckel (6) verbunden sind,
- besagte mindestens eine Rührwelle (17) und besagte Ausweichschraube (21) und besagter Deckel (6) statische Elemente sind, und
- besagter zylindrischer Körper (1) und dessen Zwischenboden und unterer Boden (2), (5) bilden eine rotierende Anordnung.

2. Keimtank für Mälzereien gemäss Anspruch 1, der ausserdem über eine zentrale hohle Säule (23) verfügt, um das Getreide zu lüften, befeuchten und auszuweichen.

3. Keimtank für Mälzereien gemäss Anspruch 2, der ausserdem **dadurch gekennzeichnet ist, dass** besagte zentrale Säule (23) an dem Deckel (6) befestigt ist und statisch ist.

4. Keimtank für Mälzereien gemäss einem der vorhergehenden Ansprüche, der ausserdem **dadurch gekennzeichnet ist, dass** die rotierende Anordnung, die der zylindrische Körper (1) und dessen Zwischenboden und unterer Boden (2), (5) bilden, durch Rollenelemente (7) auf einer umlaufenden Führung (8) rotiert.

5. Keimtank für Mälzereien gemäss Anspruch 4, der ausserdem **dadurch gekennzeichnet ist, dass** jedes Rollenelement (7) über eine antriebsreduzierende Vorrichtung (9) verfügt.

6. Keimtank für Mälzereien gemäss einem der vorhergehenden Ansprüche, der ausserdem **dadurch gekennzeichnet ist dass** der untere Boden (5) konisch ausgebildet ist.

7. Keimtank für Mälzereien gemäss Anspruch 6, der ausserdem **dadurch gekennzeichnet ist, dass** in der Mitte des unteren Bodens (5) eine ringförmige Führung (10) vorgesehen ist, auf der ein Satz von Rollenauflagern (11) für die Basis des Tanks ruht.

8. Keimtank für Mälzereien gemäss einem der vorhergehenden Ansprüche, der ausserdem **dadurch gekennzeichnet ist, dass** der obere Deckel (6) eine Basisstruktur (12) umfasst, die am Boden (15) befestigt ist und einen Gang (13) ausbildet, in dem sich die Antriebsmotoren (16), (18) der mindestens einen Rührwelle (17) und die Ausweichschraube (21) befinden, wo sie von der Umgebung der Fermentierkammer (3) abgeschirmt sind.

9. Keimtank für Mälzereien gemäss Anspruch 8, der ausserdem **dadurch gekennzeichnet ist, dass** ein Treppenaufgang (14), um den Gang (13) zu betreten auf der Struktur vorgesehen ist, die die Basisstruktur (12) des oberen Deckels (6) mit dem Boden (15) verbindet.

10. Keimtank für Mälzereien gemäss einem der vorhergehenden Ansprüche, der ausserdem **dadurch gekennzeichnet ist, dass** der Deckel (6) an dem zylindrischen Körper (1) mittel einer wasserdichten Dichtung befestigt ist.

## Revendications

1. Cuve de germination pour malteries comprenant :
- un corps cylindriques (1)
- un couvercle supérieur (6) fermant ledit corps cylindrique (1),
- au moins un essieu directeur (17) à l'intérieur dudit corps cylindrique (1),
- une vis sans fin de décharge (21) à l'intérieur dudit corps cylindrique (1),
- un fond intermédiaire (2), en treillis ou perforé, dudit corps cylindrique (1), et
- un fond inférieur (5), complètement fermé, dudit corps cylindrique (1),
**caractérisée en ce qu'**
- au moins ledit essieu directeur (17) et ladite vis sans fin de décharge (21) sont associés au couvercle (6),
- au moins ledit essieu directeur (17), ladite vis sans fin de décharge (21) et ledit couvercle supérieur (6) sont des éléments à demeure, et
- au moins le corps cylindrique (1) et ses fonds intermédiaire et inférieur (2), (5) forment un ensemble rotatif.

2. Cuve de germination pour malteries selon la revendication 1, comprenant en outre une colonne creuse centrale (23) pour aérer, humidifier et décharger le céréale.

3. Cuve de germination pour malteries selon la revendication 2, caractérisée, en outre, en que ladite colonne centrale (23) est accouplée au couvercle (6), et à demeure.

4. Cuve de germination selon l'une quelconque des revendications précédentes, **caractérisée en outre, en ce que** l'on fait tourner l'ensemble rotatif formé par le corps cylindrique (1) et ses fonds intermédiaire et inférieur (2), (5), au moyen d'éléments de compactage (7) sur un guide circonférentiel (8).

5. Cuve de germination pour malteries selon la revendication 4, **caractérisée en outre, en ce que** chaque élément de compactage (7) inclut un ensemble motoréducteur (9).

6. Cuve de germination pour malteries selon l'une quelconque des revendications précédentes, **caractérisée en outre, en ce que** le fond inférieur (5) épouse une configuration conique

7. Cuve de germination pour malteries selon l'une quelconque des revendications précédentes **caractérisée en outre, en ce qu'**au centre du fond inférieur (5) est mis en place un guide annulaire (10), sur lequel repose un ensemble de supports de compactage (11) pour la base de la cuve.

8. Cuve de germination pour malteries selon l'une quelconque des revendications précédentes **caractérisée en outre, en ce que** le couvercle supérieur (6) comprend une structure de base (12) unie au sol (15), qui détermine un passage (13) où les moteurs d'entraînement (16), (18) d'au moins un essieu directeur (17) et de la vis sans fin de décharge (21) sont situés et préservés de l'environnement de la chambre de fermentation (3).

9. Cuve de germination pour malteries selon la revendication 8, **caractérisée en outre, en ce que** les cages d'escalier extrêmes (14) pour rentrer dans le passage (13) sont mises en place sur la structure unissant la structure de base (12) du couvercle supérieur (6) avec le sol (15).

10. Cuve de germination pour malteries selon l'une quelconque des revendications précédentes **caractérisée en outre, en ce que** le couvercle (6) est accouplé au corps cylindrique (1) au moyen d'un joint d'étanchéité.
